# EUROPEAN PATENT SPECIFICATION

(11) **EP 1 308 090 B1**
(45) Date of publication and mention of the grant of the patent: **24.08.2005**
(21) Application number: 02008282.2
(22) Date of filing: 22.04.2002
(51) Int. Cl.: A01K 45/00

(54) **Apparatus for handling stacks of coops for automatic loading of poultry in general**
Vorrichtung zum Handhaben von Käfigstapeln, im Allgemeinen zum automatischen Laden von Geflügel
Dispositif pour manipuler des piles de cages pour le chargement automatique de volailles en général

(30) Priority: 02.11.2001 IT MI20012305
(43) Date of publication of application: 07.05.2003
(73) Proprietor: Ciemme Di Calabria Fratelli s.n.c., 25046 Cazzago San Martino (Prov. of Brescia) (IT)
(72) Inventor: Calabria, Paolo, 25036 Palazzolo, (Prov. of Brescia) (IT); Calabria, Eugenio, 25036 Palazzolo, (Prov. of Brescia) (IT)
(74) Representative: Modiano, Guido

(56) References cited:
- EP-A- 0 713 642
- US-A- 4 600 351
- US-A- 5 476 353
- US-A- 5 791 854
- US-A1- 2002 009 355

## Description

The present invention relates to an apparatus for handling stacks of coops for automatic loading of poultry in general.

It is known that poultry such as chickens, turkeys and the like are currently cooped by using devices that automatically take the poultry from the rearing spaces in order to place them in the coops, which are typically arranged in stacks.

Considerable difficulties are currently encountered in handling the stacks of coops and bottlenecks occur during cooping of the poultry owing to the need to change the stack of coops.

Another problem relates to the correct weighing of the cooped poultry, which in many cases requires adjustments, adding or removing poultry in order to reach the intended weight.

Clearly, this method causes a considerable waste of time, which inevitably has a negative effect on production costs.

A poultry handling apparatus that has the features set forth in the preamble of claim 1 is known from EP-A-0 713 642.

The aim of the present invention is to eliminate the drawbacks noted above, by providing an apparatus for handling stacks of coops for the automatic loading of poultry in general, which allows to organize and simplify the entire step related to the handling of the stack of coops without thereby having idle times during the poultry cooping step.

Within this aim, a particular object of the invention is to provide an apparatus that allows to weigh the cooped poultry rapidly and accurately, thus facilitating all the associated operations.

Another object of the present invention is to provide an apparatus that is particularly versatile and can be transferred rapidly and easily to the site of use without thereby requiring particular interventions.

Another object of the present invention is to provide an apparatus that, by virtue of its particular constructive characteristics, is capable of giving the greatest assurances of reliability and safety in use.

Another object of the present invention is to provide an apparatus for handling stacks of coops for the automatic loading of poultry in general that can be obtained easily starting from commonly commercially available elements and materials and is further competitive from a merely economical standpoint.

This aim and these and other objects that willbecome better apparent hereinafter are achieved by an apparatus for handling stacks of coops for the automatic loading of poultry in general, according to the invention, that is defined by the features of claim 1.

Other advantageous features of the invention are set forth in the dependent claims.

Further characteristics and advantages of the invention will become better apparent from the following detailed description of a preferred but not exclusive embodiment of an apparatus for handling stacks of coops for the automatic loading of poultry in general, illustrated only by way of non-limitative example in the accompanying drawings, wherein:

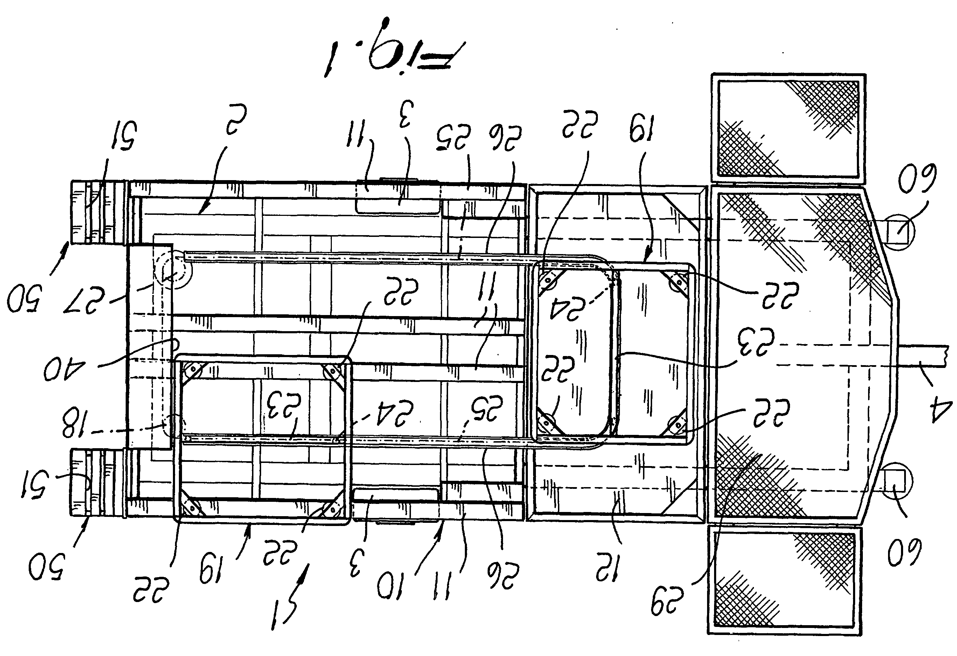

Figure 1 is a schematic plan view of the apparatus according to the invention;

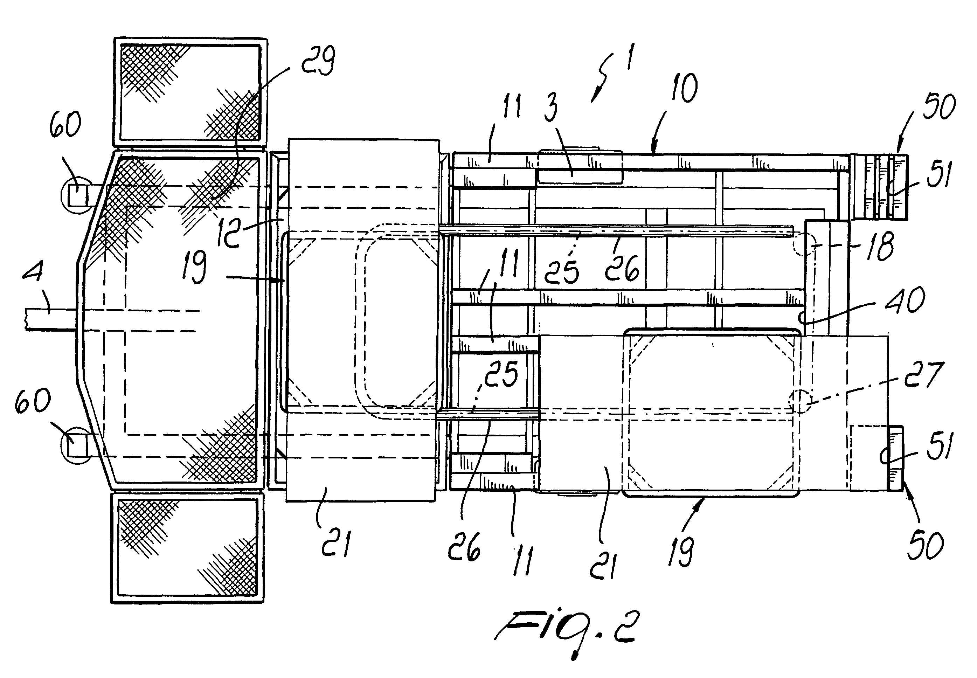

Figure 2 is a plan view of the apparatus, illustrating two stacks of coops arranged respectively in a loading and unloading station and in the poultry loading station;

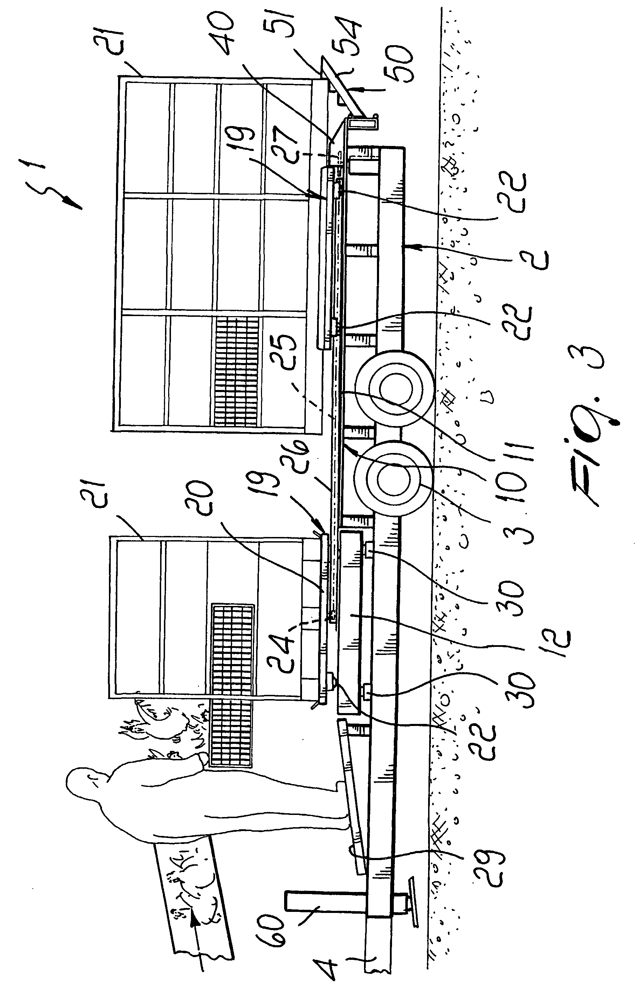

Figure 3 is a schematic view of the step of loading the poultry;
Figure 4 is a view of the apparatus according to the invention during the step of positioning the poultry loading machine, of the self-propelled type, on the apparatus.

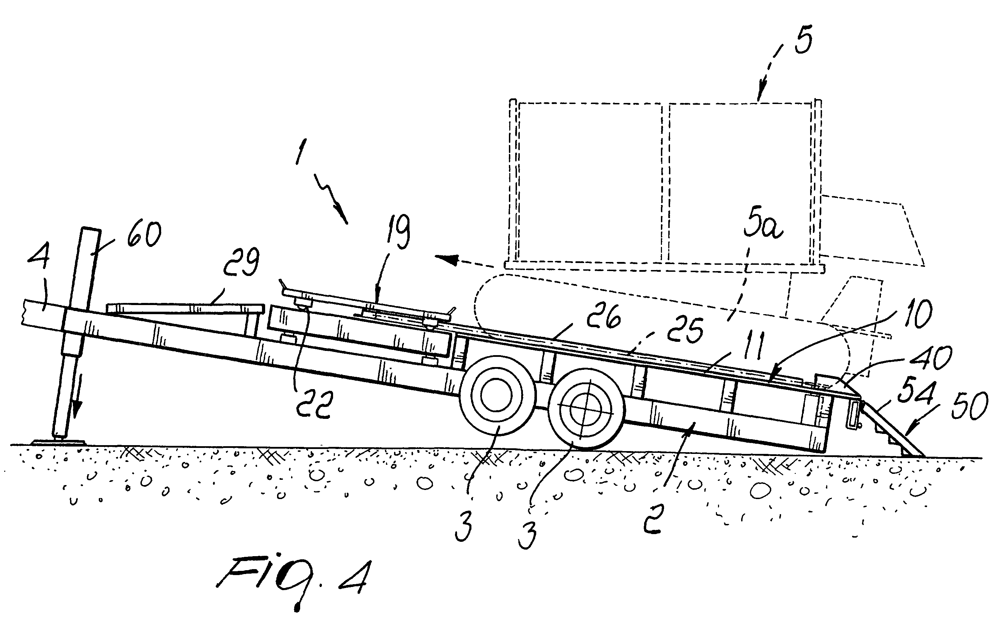

With reference to the figures, the apparatus for handling stacks of coops for the automatic loading of poultry in general, according to the invention, generally designated by the reference numeral 1, comprises a supporting chassis 2, which is preferably mounted on wheels 3 and is provided, at the front, with a drawbar 4 for its coupling to a poultry loading machine, which is preferably of the self-propelled type and is schematically designated by the reference numeral 5 in Figure 4.

The chassis 2 forms, in an upward region, a deck 10 which is substantially rectangular and forms, at both lateral regions of the deck 10, two longitudinal tracks 11, which are connected, in the front portion, to a central platform 12.

At least one tray and preferably a plurality of trays 19 for supporting a stack of coops, generally designated by the reference numeral 21, can move on the longitudinal tracks 11 and on the central platform 12.

The trays can move from loading and unloading stations, which are formed at the rear portions of the tracks 11, toward a poultry loading station, which is located on the central platform 12.

The trays 19 generally have a frame 20 which is preferably square and supports in a downward region, at each corner thereof, rolling balls 22, which can move on the tracks 11, while a cross-member 23 is arranged centrally and is provided with pins 24 which can be coupled detachably to a traction chain 25, which can slide within a guiding seat or track 26 that traces a substantially U-like path, with two lateral portions arranged between the tracks 11 and a front portion where rotation occurs, said front portion affecting the central platform 12.

The chain 25 is actuated by a motor pinion 27, which meshes with the chain at the end of one of the lateral portions of the track 26 and acts as a guiding element for the chain which, by winding around a guiding pinion 18 arranged at the free end of the other portion, allows to assume a closed shape, and can thus move the trays 19 and the supported stack of coops 21, from the loading to the unloading station and from the loading and unloading stations toward the poultry loading station.

With the described arrangement it is therefore possible to handle the trays 19 and accordingly the stack of coops 21 supported thereon so as to place a stack at the central platform 12, where loading occurs, and simultaneously move toward the rear end the previously loaded stack, so as to be able to unload it and replace it with a stack of empty coops, already prepared for subsequent transfer to the central platform 12.

At the front, on the deck 10 there is a grid-like surface 29 for the placement of an operator, who directs the poultry insertion channel that arrives from the loading machine, which is not described in detail since it is of a per se known type.

An important aspect of the invention is that the platform 12 is structurally separate from the remaining part of the deck 10, so that it is possible to provide a weighing station by way of the presence of load cells 30 arranged under the central platform 12, which thus allows to weigh the poultry as it is inserted in the coops, so as to be able to achieve filling up to the intended weight because weighing is performed simultaneously with the poultry insertion step.

For correct weighing, it should be noted that the track 26 that contains the chain 25 in this region is superimposed on, but spaced from, the central platform 12 and therefore does not interfere in any way with the correct weighing performed by the platform 12, which in practice detects the weight of the tray and of the stack of coops, which constitute the tare, and can thus weigh accurately the inserted poultry.

It should be added to the above that a central abutment 40 is arranged at the rear region of the deck 10 and engages the edge of the tray 19, acting as a stroke limiter.

Further, it is possible to connect to the rear of the supporting chassis 1 step-like elements 50, which form on one side abutments 51 for positioning the stack of coops, which is thus centered correctly with respect to the tray 19.

On the opposite side, the step-like elements 50 have a supporting longitudinal member 54, which acts as a ramp element when the steps 50, as shown in Figure 4, are arranged upside down with respect to the position of normal use in order to act as a stroke limiter.

Jacks 60 are connected to the front of the chassis 2 and are of the extendible type, so as to allow to tilt the chassis 2, forming in practice, in combination with the step-like elements 50 mounted upside down, as shown in Figure 4, a path for the ascent of the machine 5, which is advantageously provided with tracks 5a, so that once the poultry cooping work has been completed it can be easily loaded onto the supporting chassis, which can be transported like an ordinary trailer or can optionally be loaded directly onto another vehicle.

In this manner, the apparatus according to the invention is particularly versatile, since it can be easily transported to any place of use, can perform efficient handling of the stacks of coops, and can also weigh the poultry inserted in said coops simultaneously with the step for their insertion in the coops.

Another important aspect is that the poultry loading machine can be transported directly by means of the supporting chassis that forms the handling deck, thus making it particularly easy and simple to transfer the apparatus.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (1) for handling stacks of coops (21) for the automatic loading of poultry in general, comprising a supporting chassis (2) which can be coupled to a poultry loading machine (5) and forms a deck (10) for the movement of at least one tray (19) that supports a stack of coops (21), said tray (19) being movable from a station for loading and unloading the stack of coops (21) to a station for loading the poultry that comprises a central platform (12), and/or vice versa, **characterized in that** said central platform (12) is structurally separate from the remaining portion of said deck (10) and forms a weighing station for weighing the poultry during insertion in the coops (21).

2. The apparatus (1) for handling stacks of coops (21) according to claim 1, **characterized in that** said supporting chassis (2) is provided with wheels (3) for its transfer.

3. The apparatus (1) for handling stacks of coops (21) according to the preceding claims, **characterized in that** said deck (10) is substantially rectangular and forms, at the rear ends of the lateral regions of the deck (10), loading and unloading stations, said poultry loading station being formed in the central front portion.

4. The apparatus (1) for handling stacks of coops (21) according to one or more of the preceding claims, **characterized in that** it comprises, at the lateral regions of said deck (10), two longitudinal tracks (11) connected to said central platform (12), with trays (19) being movable on said longitudinal tracks (11) and on said central platform (12).

5. The apparatus (1) for handling stacks of coops (21) according to one or more of the preceding claims, **characterized in that** the trays (19) comprise a frame (20) which supports in a downward region rolling balls (22) which can move on said tracks (11), a cross-member (23) being provided in a central portion of the frame (20) and having pins (24) which can be detachably coupled to traction means.

6. The apparatus (1) for handling stacks of coops (21) according to claim 5, **characterized in that** said traction means comprise a traction chain (25), which can slide within a guiding seat or track (26) that runs substantially along a U-shaped path with two lateral portions arranged between said tracks (11) and a front portion that affects said central platform (12), said traction chain (25) being actuated by a traction pinion (27) arranged at the end of one of said lateral portions and winding around a guiding pinion (18) located at the end of the other one of said lateral portions.

7. The apparatus (1) for handling stacks of coops (21) according to claim 6, **characterized in that** said traction chain (25) is suitable to simultaneously move a stack of coops (21) from said loading station toward an unloading station and a stack (21) from a loading and unloading station toward said poultry loading station (12).

8. The apparatus (1) for handling stacks of coops (21) according to one or more of the preceding claims, **characterized in that** it comprises, in the front portion of said deck (10), a grid-like surface (29) for the placement of an operator for actuating a poultry insertion channel.

9. The apparatus (1) for handling stacks of coops (21) according to one or more of the preceding claims, **characterized in that** said central platform (12) engages on load cells (30) which are supported by said supporting chassis (2) in order to weigh the poultry during insertion in the coops (21).

10. The apparatus (1) for handling stacks of coops (21) according to one or more of the claims 6-9, **characterized in that** said track (26) for accommodating said traction chain (25) is spaced from said central platform (12).

11. The apparatus (1) for handling stacks of coops (21) ccording to one or more of the preceding claims, **characterized in that** it comprises, at the rear region of said deck (10), a central abutment (40) that can engage the edge of one of the trays (19) in order to act as a stroke limiter for translational motion.

12. The apparatus (1) for handling stacks of coops (21) according to one or more of the preceding claims, **characterized in that** it comprises, at the rear end of said supporting chassis (2), step-like elements (50) which form, on one side, abutments (51) for positioning the stack of coops (21) for its centering with respect to the tray (19) and, on the opposite side, a longitudinal supporting member (54) which is suitable to act as a ramp element for connecting said deck (10) to the ground.

13. The apparatus (1) for handling stacks of coops (21) according to one or more of the preceding claims, **characterized in that** it comprises, at the front end of said supporting chassis (2), jacks (60) of the extendible type for tilting said supporting chassis (2) in order to arrange it like a ramp for self-loading the poultry loading machine (5).

14. The apparatus (1) for handling stacks of coops (21) according to one or more of the preceding claims, **characterized in that** said poultry loading machine (5) is of the tracked type.

## Patentansprüche

1. Fördervorrichtung (1) für Käfigstapel (21) zum automatischen Verladen von Geflügel im Allgemeinen, mit einem Untergestell (2), das an eine Geflügelverlademaschine (5) gekuppelt werden kann und eine Platte (10) für die Bewegung von mindestens einem Boden (19) bildet, der einen Käfigstapel (21) trägt, wobei der Boden (19) von einer Station zum Be- und Entladen des Käfigstapels (21) zu einer Station zum Verladen des Geflügels, die eine zentrale Plattform (12) aufweist, und/oder umgekehrt bewegbar ist, **dadurch gekennzeichnet, daß** die zentrale Plattform (12) baulich getrennt von dem restlichen Teil der Platte (10) ist und eine Wiegestation zum Wiegen des Geflügels während des Einladens in die Käfige (21) bildet.

2. Fördervorrichtung (1) für Käfigstapel (21) nach Anspruch 1, **dadurch gekennzeichnet, daß** das Untergestell (2) mit Rädern (3) für dessen Transport versehen ist.

3. Fördervorrichtung (1) für Käfigstapel (21) nach den vorhergehenden Ansprüchen, **dadurch gekennzeichnet, daß** die Platte (10) im Wesentlichen rechtwinklig ist und an den hinteren Enden der seitlichen Bereiche der Platte (10) Be- und Entladestationen bildet, wobei die Geflügelverladestation in dem zentralen vorderen Teil gebildet ist.

4. Fördervorrichtung (1) für Käfigstapel (21) nach einem oder mehreren der vorhergehenden Ansprüche, **dadurch gekennzeichnet, daß** sie an den seitlichen Bereichen der Platte (10) zwei in Längsrichtung verlaufende Schienen (11) aufweist, die mit der zentralen Plattform (12) verbunden sind, wobei die Böden (19) auf den in Längsrichtung verlaufenden Schienen (11) und auf der zentralen Plattform (12) bewegbar sind.

5. Fördervorrichtung (1) für Käfigstapel (21) nach einem oder mehreren der vorhergehenden Ansprüche, **dadurch gekennzeichnet, daß** die Böden (19) einen Rahmen (20) aufweisen, der in einem unteren Bereich Rollkugeln (22) trägt, die sich auf den Schienen (11) bewegen können, wobei ein querverlaufendes Teil (23) in einem zentralen Teil des Rahmens (20) vorgesehen ist und Zapfen (24) hat, die lösbar mit einem Zugmittel verbunden werden können.

6. Fördervorrichtung (1) für Käfigstapel (21) nach Anspruch 5, **dadurch gekennzeichnet, daß** das Zugmittel eine Zugkette (25) aufweist, die in einem Führungssitz oder einer Führungsschiene (26) gleiten kann, der bzw. die im Wesentlichen entlang einer U-förmigen Bahn verläuft, wobei zwei seitliche Abschnitte zwischen den Schienen (11) angeordnet sind und ein vorderer Abschnitt mit der zentralen Plattform (12) zusammenwirkt, wobei die Zugkette (25) durch ein Zugritzel (27) betätigt wird, das an dem Ende von einem der seitlichen Abschnitte angeordnet ist, und um ein Führungsritzel (18) herum verläuft, das an dem Ende des anderen seitlichen Abschnittes angeordnet ist.

7. Fördervorrichtung (1) für Käfigstapel (21) nach Anspruch 6, **dadurch gekennzeichnet, daß** die Zugkette (25) dafür geeignet ist, gleichzeitig einen Käfigstapel (21) von der Beladestation in Richtung einer Entladestation und einen Stapel (21) von einer Be- und Entladestation in Richtung der Geflügelverladestation (12) zu bewegen.

8. Fördervorrichtung (1) für Käfigstapel (21) nach einem oder mehreren der vorhergehenden Ansprüche, **dadurch gekennzeichnet, daß** sie im vorderen Teil der Platte (10) eine gitterähnliche Oberfläche (29) für die Platzierung einer Bedienungsperson zum Betätigen eines Geflügeleinladekanals aufweist.

9. Fördervorrichtung (1) für Käfigstapel (21) nach einem oder mehreren der vorhergehenden Ansprüche, **dadurch gekennzeichnet, daß** die zentrale Plattform (12) mit Wägezellen (30) zusammenarbeitet, die von dem Untergestell (2) getragen werden, um das Geflügel während der Einladung in die Käfige (21) zu wiegen.

10. Fördervorrichtung (1) für Käfigstapel (21) nach einem oder mehreren der Ansprüche 6 bis 9, **dadurch gekennzeichnet, daß** die Schiene (26) für die Aufnahme der Zugkette (25) einen Abstand von der zentralen Plattform (12) hat.

11. Fördervorrichtung (1) für Käfigstapel (21) nach einem oder mehreren der vorhergehenden Ansprüche, **dadurch gekennzeichnet, daß** sie im hinteren Bereich der Platte (10) einen zentralen Anschlag (40) aufweist, der an der Kante von einem der Böden (19) angreifen kann, um als Hubbegrenzer für eine translatorische Bewegung zu dienen.

12. Fördervorrichtung (1) für Käf igstapel (21) nach einem oder mehreren der vorhergehenden Ansprüche, **dadurch gekennzeichnet, daß** sie am hinteren Ende des Untergestells (2) stufenähnliche Elemente (50) aufweist, die auf der einen Seite Anschläge (51) zum Positionieren des Käfigstapels (21) für seine Zentrierung bezüglich des Bodens (19), und auf der gegenüberliegenden Seite ein in Längsrichtung verlaufendes Stützteil (54) bilden, das dafür geeignet ist, als Rampenelement zum Verbinden der Platte (10) mit dem Boden zu dienen.

13. Fördervorrichtung (1) für Käf igstapel (21) nach einem oder mehreren der vorhergehenden Ansprüche, **dadurch gekennzeichnet, daß** sie an dem vorderen Ende des Untergestells (2) Stützen (60) des ausfahrbaren Typs zum Schrägstellen des Untergestells (2), um es wie eine Rampe für die Selbstverladung der Geflügelverlademaschine (5) anzuordnen, aufweist.

14. Fördervorrichtung (1) für Käfigstapel (21) nach einem oder mehreren der vorhergehenden Ansprüche, **dadurch gekennzeichnet, daß** die Geflügelverlademaschine (5) ein Raupentyp ist.

## Revendications

1. Dispositif (1) pour manipuler des piles de cages (21) pour le chargement automatique de volaille en général, comprenant un châssis de support (2) qui peut être couplé à une machine de chargement de volaille (5) et qui forme une table (10) pour le déplacement d'au moins un plateau (19) qui supporte une pile de cages (21), ledit plateau (19) pouvant se déplacer d'une station pour le chargement et le déchargement de la pile de cages (21) à une station pour le chargement de la volaille, qui comprend une plate-forme centrale (12), et/ou inversement, **caractérisé en ce que** ladite plate-forme centrale (12) est structurellement séparée de la partie restante de ladite table (10) et constitue une station de pesage pour peser la volaille durant l'insertion dans les cages (21).

2. Dispositif (1) pour manipuler des piles de cages (21) selon la revendication 1, **caractérisé en ce que** ledit châssis de support (2) est muni de roues (3) pour son transfert.

3. Dispositif (1) pour manipuler des piles de cages (21) selon les revendications précédentes, **caractérisé en ce que** ladite table (10) est sensiblement rectangulaire, et constitue, aux extrémités arrières des régions latérales de la table (10), des stations de chargement et de déchargement, ladite station de chargement de volaille étant formée dans la partie avant centrale.

4. Dispositif (1) pour manipuler des piles de cages (21) selon l'une ou plusieurs des revendications précédentes, **caractérisé en ce qu'**il comprend, dans les régions latérales de ladite table (10), deux pistes longitudinales (11) reliées à ladite plate-forme centrale (12), avec des plateaux (19) qui peuvent se déplacer sur lesdites pistes longitudinales (11) et sur ladite plate-forme centrale (12).

5. Dispositif (1) pour manipuler des piles de cages (21) selon l'une ou plusieurs des revendications précédentes, **caractérisé en ce que** les plateaux (19) comprennent un bâti (20) qui supporte, dans une région inférieure, des billes de roulement (21) qui peuvent se déplacer sur lesdites pistes (11), une entretoise (23) étant disposée dans une partie centrale du bâti (20) et comportant des broches (24) qui peuvent être couplées de façon détachable à des moyens de traction.

6. Dispositif (1) pour manipuler des piles de cages (21) selon la revendication 5, **caractérisé en ce que** lesdits moyens de traction comprennent une chaîne de traction (25), qui peut coulisser à l'intérieur d'une piste ou d'un siège de guidage (26) qui s'étend sensiblement le long d'un trajet en forme de U avec deux parties latérales agencées entre lesdites pistes (11) et une partie avant qui affecte ladite plate-forme centrale (12), ladite chaîne de traction (25) étant actionnée par un pignon de traction (27) agencé à l'extrémité de l'une desdites parties latérales et s'enroulant autour d'un pignon de guidage (18) situé à l'extrémité de l'autre desdites parties latérales.

7. Dispositif (1) pour manipuler des piles de cages (21) selon la revendication 6, **caractérisé en ce que** ladite chaîne de traction (25) est appropriée pour déplacer simultanément une pile de cages (21) à partir de ladite station de chargement vers une station de déchargement et une pile (21) à partir d'une station de chargement et de déchargement vers ladite station de chargement de volaille (12).

8. Dispositif (1) pour manipuler des piles de cages (21) selon l'une ou plusieurs des revendications précédentes, **caractérisé en ce qu'**il comprend, dans la partie avant de ladite table (10), une surface en forme de grille (29) pour la disposition d'un opérateur pour actionner un canal d'insertion de volaille.

9. Dispositif (1) pour manipuler des piles de cages (21) selon l'une ou plusieurs des revendications précédentes, **caractérisé en ce que** ladite plate-forme centrale (12) vient en prise sur des capteurs dynamométriques (30) qui sont supportés par ledit châssis de support (2) afin de peser la volaille durant l'insertion dans les cages (21).

10. Dispositif (1) pour manipuler des piles de cages (21) selon l'une ou plusieurs des revendications 6 à 9, **caractérisé en ce que** ladite piste (26) pour recevoir ladite chaîne de traction (25) est espacée de ladite plate-forme centrale (12).

11. Dispositif (1) pour manipuler des piles de cages (21) selon l'une ou plusieurs des revendications précédentes, **caractérisé en ce qu'**il comprend, dans la région arrière de ladite table (10), une butée centrale (40) qui peut venir en prise avec le bord de l'un des plateaux (19) de façon à jouer le rôle de limiteur de course pour un déplacement de translation.

12. Dispositif (1) pour manipuler des piles de cages (21) selon l'une ou plusieurs des revendications précédentes, **caractérisé en ce qu'**il comprend, à l'extrémité arrière dudit châssis de support (2), des éléments en forme de marche (50), qui forment, sur un côté, des butées (51) pour positionner la pile de cages (21) pour son centrage par rapport au plateau (19), et, sur le côté opposé, un élément de support longitudinal (54) qui est approprié pour jouer le rôle d'élément de rampe pour relier ladite table (10) au sol.

13. Dispositif (1) pour manipuler des piles de cages (21) selon l'une ou plusieurs des revendications précédentes, **caractérisé en ce qu'**il comprend, à l'extrémité avant dudit châssis de support (2), des vérins (60) du type extensible pour incliner ledit châssis de support (2) de façon à le configurer en forme de rampe pour l'auto-chargement de la machine de chargement de volaille (5).

14. Dispositif (1) pour manipuler des piles de cages (21) selon l'une ou plusieurs des revendications précédentes, **caractérisé en ce que** ladite machine de chargement de volaille (5) est du type à chenilles.
